# EUROPEAN PATENT SPECIFICATION

(11) **EP 3 622 666 B1**
(45) Date of publication and mention of the grant of the patent: **30.11.2022**
(21) Application number: 18719876.7
(22) Date of filing: 25.04.2018
(51) Int. Cl.: H04L 9/38, G06K 19/10, G06K 19/08, G06K 19/06, G06F 21/44, G09C 5/00, H04L 9/32

(54) **A METHOD AND A SYSTEM FOR CREATING AND AUTHENTICATING A BINARY GRAPHIC CODE**
VERFAHREN UND SYSTEM ZUR ERZEUGUNG UND AUTHENTIFIZIERUNG EINES BINÄREN GRAFISCHEN CODES
PROCÉDÉ ET SYSTÈME DE CRÉATION ET D'AUTHENTIFICATION D'UN CODE GRAPHIQUE BINAIRE

(30) Priority: 09.05.2017 CN 201710321414
(43) Date of publication of application: 18.03.2020
(73) Proprietor: Robert Bosch GmbH, 70442 Stuttgart (DE); Fudan University, Shanghai 200433 (CN)
(72) Inventor: XIE, Hui, Shanghai 200335 (CN); ROSE, Hannes, Shanghai 200335 (CN); ZOU, Zhuo, Shanghai 200433 (CN); YEH, Shih-Ching, Shanghai 200433 (CN); SHANG, Huiliang, Shanghai 200433 (CN); HAN, Xu, Shanghai 200335 (CN); ZHENG, Lirong, Shanghai 200433 (CN)
(86) International application number: PCT/EP2018/060532
(87) International publication number: WO 2018/206288

(56) References cited:
- CN-A- 106 446 866
- US-A1- 2004 211 844
- US-A1- 2017 124 441

## Description

### Technical Field

The present invention relates to a digital anti-counterfeiting technology, in particular to a method and a system for creating and authenticating a binary graphic code.

### Background Art

Counterfeit products are a global problem. The prior art mainly adopts physical or digital technologies to prevent products from being forged. Physical anti-counterfeiting technologies, such as holograms and watermarks, may require additional equipment support and manual identification for verification, which is inconvenient for users to operate. Digital anti-counterfeiting technologies, such as two-dimensional codes and bar codes, can be verified only by smartphones and other terminals, facilitating related links in a supply chain and operations by end users; their disadvantage is that the digital security label itself can be easily copied and counterfeited. Relevant examples of physical anti-counterfeiting technologies are described in US 2017/124441 A1, US 2004/211844 A1 and CN 106 446 866 A.

### Summary of the Invention

In order to solve the problems existing in the prior art, the present application provides a method and a system for creating and authenticating a binary graphic code.

The described embodiments are to be considered only as illustrative and not restrictive. The scope of the invention is defined by the appended claims, the dependent claims define further embodiments of the invention.

The present application discloses a method for creating an authenticable binary graphic code, comprising at least the following steps:
in response to a request for creation of a binary graphic code, creating a binary graphic encoded pattern for the information to be encoded;
adding microstructure features to the binary graphic encoded pattern;
extracting the binary graphic encoded pattern and microstructure features; and
recording the binary graphic encoded pattern and microstructure features as all or part of a standard for authenticating the binary graphic code.

In a feasible implementation, the microstructure features are randomly or pseudo-randomly generated.

In a feasible implementation, before the step of extracting the binary graphic encoded pattern and the microstructure features, the method further comprises a step of printing the binary graphic encoded pattern and the microstructure features on a label or a product surface.

In a feasible implementation, a self-texture of the label or product surface has an effect on the integrity of the microstructure feature.

In a feasible implementation, the effect of a self-texture of the label or product surface on the integrity of the microstructure features is random.

In a feasible implementation, characteristic information about the area in which the binary graphic encoded pattern and the label or product surface overlap is also extracted and recorded as part of a standard for authenticating the binary graphic code.

In a feasible implementation, the characteristic information includes a relative positional relationship between a printed pattern or a self-texture of the label or product surface and the encoded pattern.

In a feasible implementation, the method for determining the relative positional relationship comprises: when the encoded pattern is used as a coordinate, a printed pattern or self-texture of the label or product surface is in a coordinate on the encoded pattern.

The present application provides a product carrying an authenticable binary graphic code, comprising a binary graphic encoded pattern printed on the product surface and a product body, wherein microstructure features are added to the binary graphic encoded pattern, and the binary graphic encoded pattern and microstructure features are extracted and recorded as all or part of a standard for authenticating the product carrying the authenticable binary graphic code.

In a feasible implementation, the microstructure features are randomly or pseudo-randomly generated.

In a feasible implementation, a self-texture of the label or product surface has an effect on the integrity of the microstructure feature.

In a feasible implementation, characteristic information about the area in which the binary graphic encoded pattern and the product surface overlap is also extracted and recorded as part of a standard for authenticating the binary graphic code.

In a feasible implementation, the characteristic information includes a relative positional relationship between a printed pattern or a self-texture of the label or product surface and the encoded pattern.

The present application also discloses a method for authenticating a binary graphic code created by using the aforesaid method, which at least comprises the following steps:
in response to a request for authentication of a binary graphic code, reading the binary graphic code to be authenticated;
identifying the binary graphic encoded pattern and microstructure features; comparing the to-be-authenticated binary graphic encoded pattern and microstructure features with recorded binary graphic encoded patterns and microstructure features; and
providing an authentication result.

In a feasible implementation, a method for comparing the to-be-authenticated binary graphic encoded pattern and microstructure features with recorded binary graphic encoded patterns and microstructure features comprises: judging whether the degree of matching between the two reaches a set threshold; if the set threshold is reached, the authentication is deemed to have been passed; otherwise, the authentication is deemed to have not been passed.

In a feasible implementation, the step of providing an authentication result further comprises: if the authentication is deemed to have been passed, allowing the encoded pattern to be decoded and obtaining confidential information.

In a feasible implementation, the information to be encoded is confidential information or a confidential information index.

In a feasible implementation, when the information to be encoded is a confidential information index, the step of allowing the encoded pattern to be decoded and obtaining confidential information comprises:
generating a query password immediately, the query password having a validity period;
sending the query password to the requester of binary graphic code creation and confirming its receipt;
sending the query password and decoding key to the requester of binary graphic code authentication;
the requester of binary graphic code authentication performing decoding using the decoding key, obtaining the confidential information index, and sending the confidential information index and the received query password to the requester of binary graphic code creation;
the requester of binary graphic code creation checking whether the query password sent by the requester of binary graphic code authentication is the same as the query password received by itself and is within the validity period;
if yes, providing the requester of binary graphic code authentication with confidential information according to the confidential information index.

The present application also discloses a binary graphic code creation system for creating an authenticable binary graphic code, comprising:
an encoding unit for, in response to a request for creation of a binary graphic code, creating a unique binary graphic encoded pattern for the information to be encoded;
an addition unit for adding microstructure features to the binary graphic encoded pattern;
an extracting unit for extracting the binary graphic encoded pattern and microstructure features; and
a recording unit for recording the binary graphic encoded pattern and microstructure features as all or part of a standard for authenticating the binary graphic code.

The present application further discloses a binary graphic code authentication system, which comprises an authentication service providing end for identifying the to-be-authenticated binary graphic code created by the aforementioned system, comprising:
a reading unit for, in response to a request for authentication of a binary graphic code, reading the binary graphic code to be authenticated;
an identification unit for identifying the binary graphic encoded pattern and microstructure features;
a comparison unit for comparing the to-be-authenticated binary graphic encoded pattern and microstructure features with recorded binary graphic encoded patterns and microstructure features; and
an authentication unit for providing an authentication result.

In a feasible implementation, the authentication service providing end further comprises:
a password generating unit for generating a query password immediately when the authentication result is a pass and the information to be encoded is a confidential information index, the query password having a validity period;
a password sending unit for sending the query password to the requester of binary graphic code creation and confirming its receipt, and sending the query password and decoding key to the requester of binary graphic code authentication.

The present application also discloses a binary graphic encoding authentication system, which comprises a confidential information providing end that cooperates with an authentication service providing end of the aforementioned binary graphic code authentication system, the confidential information providing end comprising:
a password receiving unit for receiving a query password sent from the authentication service providing end and confirming its receipt, and receiving the product information index and query password sent by the requester of the binary graphic code authentication;
a password verification unit for checking whether the query password from the requester of the binary graphic code authentication is the same as the query password from the authentication service providing end and is within the validity period; and
a product information providing unit for, if the password verification is passed, providing confidential information to the requester of the binary graphic code authentication according to the confidential information index.

For a better understanding of the features and technical contents of the present application, refer to the following detailed description of the present application and the accompanying drawings. However, the drawings are provided for reference and description only, and are not intended to limit the present application.

### Brief Description of the Drawings

The foregoing and other aspects of the present application will be more fully understood with reference to the following detailed description taken in conjunction with the accompanying drawings, in which:
Figure 1 is a schematic flowchart of an embodiment of a method for creating an authenticable binary graphic code in the present application;
Figure 2a is a schematic diagram of a binary graphic encoded pattern in which microstructure features are added in a specific embodiment;
Figure 2b is a schematic diagram of a binary graphic encoded pattern in which microstructure features are added in another embodiment;
Figure 3 is a schematic diagram of a system for creating a binary graphic code according to an embodiment of the present application;
Figure 4 is a schematic flowchart illustrating a method for authenticating a binary graphic code according to an embodiment of the present application;
Figure 5 is a schematic flowchart illustrating the decoding of the binary graphic encoded pattern in an embodiment of the present application;
Figure 6 shows a schematic diagram of a binary graphic encoding authentication system in an embodiment of the present application;
Figure 7a is a schematic diagram illustrating data exchange between the two parties in the embodiment shown in Figure 1;
Figure 7b is a schematic diagram illustrating data exchange between the two parties in the embodiment shown in Figure 4;
Figure 7c is a schematic diagram illustrating data exchange among the three parties in the embodiment shown in Figure 5.

### Specific Embodiments

In order to help those of ordinary skill in the art to understand the subject matter claimed in the present application, specific embodiments of the present application will be described in detail below with reference to the accompanying drawings.

Y involved herein indicates the product provider, that is, the requester of binary graphic code creation; Z indicates the authentication service requester, that is, the requester of binary graphic code authentication; and X indicates the authentication service provider.

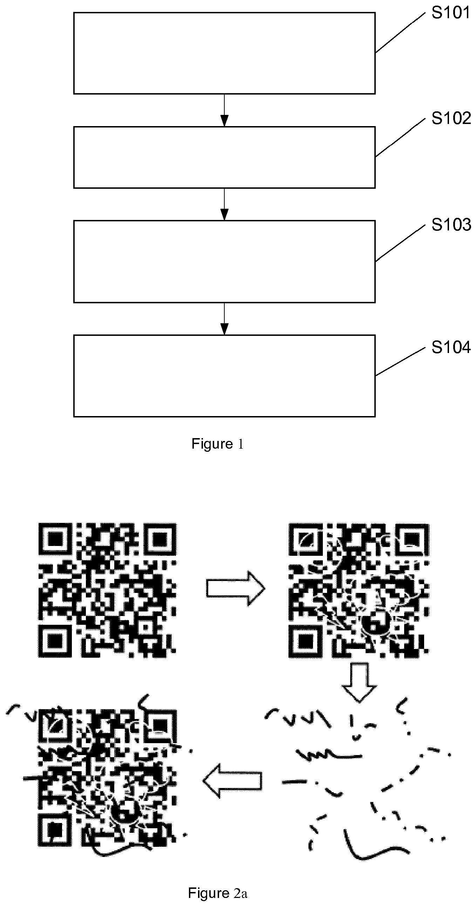

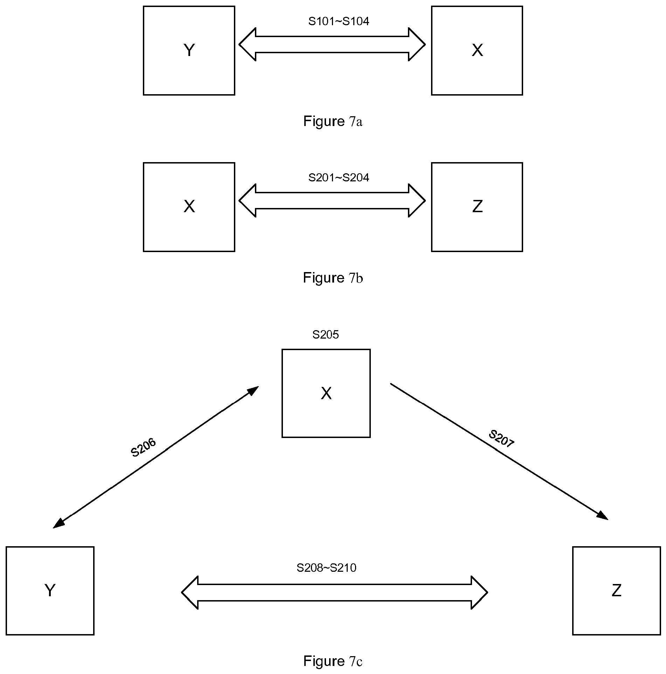

Referring to Figure 1 and Figure 7a, a method for creating an authenticable binary graphic code relates to an authentication service provider X and a product provider Y. The method at least comprises the following steps:
in step S101, the authentication service provider X, in response to a request of the requester of binary graphic code creation Y, creates a binary graphic code pattern for the information to be encoded; considering the "one code for one article" requirement in today's anti-counterfeiting standards, the binary graphic encoded pattern can be unique;
in step S102, microstructure features are added to the binary graphic encoded pattern;
in step S103, the binary graphic encoded pattern and microstructure features are extracted; and
in step S104, the authentication service provider X records the binary graphic encoded pattern and microstructure features as a standard for authenticating the binary graphic code.

Figure 2a is a schematic diagram of a binary graphic encoded pattern in which microstructure features are added in an embodiment. For ease of differentiation, the white lines represent microstructure features, and the black lines represent the self-textures of the label or product surface. The microstructure features referred to herein are, for example, small, meaningful or insignificant dots, lattices, lines, graphics, text, or a combination thereof. In order to meet anti-counterfeiting requirements, the resolution of the microstructure features is preferably within a range allowed by the output resolution of a printer or a code-sprayer; the thickness is close to the resolution of a printer or a code-sprayer; and the shapes of the micro-structure features can be randomly or pseudo-randomly generated. For example, in the present embodiment, the microstructure features are different types of lines whose thickness is close to the resolution of a printer: 600 x 600 dpi (dots per inch). As the microstructure features are small, when printed on a label or product surface, the self-textures of the label or product surface may have an effect on the integrity of the microstructure features, and this effect is random. For example, some microstructure features are lost in the printing process. Therefore, even if the shape of a microstructure feature itself is not randomly or pseudo-randomly generated, when the microstructure feature is printed on multiple labels or product surfaces, due to the effect of the self-textures of the labels or the product surfaces, the microstructure features retained by each label or product surface cannot be exactly the same. In addition, if a printed microstructure feature is copied again, some details may be further lost or missing; consequently, it is difficult for the label or product replica to reproduce the full features of the original.

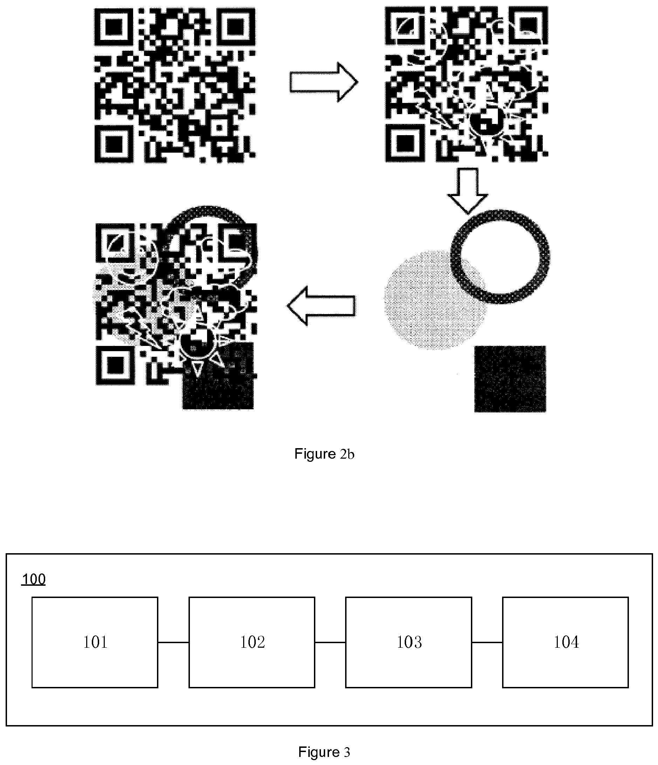

Referring to Figure 2b, in some other implementations, before the step S103 of extracting the binary graphic encoded pattern and microstructure features, the method further comprises a step of printing the binary graphic encoded pattern and microstructure features on the label or product surface. In this case, in step S103 and step S104, in addition to the binary graphic encoded pattern and microstructure features, the characteristic information about an area in which the binary graphic encoded pattern and the label or product surface overlap is also extracted and recorded as part of a standard for authenticating the binary graphic code. The characteristic information includes a relative positional relationship between a printed pattern or a self-texture of the label or product surface and the encoded pattern. A method for determining the relative positional relationship comprises: when the encoded pattern is used as a coordinate, a printed pattern or self-texture of the label or product surface is in a coordinate on the encoded pattern. In Figure 2b, the white lines represent microstructure features; the geometric patterns represent the printed patterns of the product surface; and the self-texture of the product surface is not shown.

This has the advantage that, since a binary graphic encoded pattern is usually a rectangular area, when the pattern is used as a coordinate or as a reference for positioning, the relative position between the printed pattern or the self-texture of the label or the product surface and a binary graphic encoded pattern is relatively easy to determine. Especially when the printed pattern or the self-texture of the label or product surface is complicated, compared with extracting and comparing the printed pattern or self-texture, it is easier to extract and compare the relative positional relationship between the printed pattern or self-texture of the product surface and the encoded pattern; the amount of computation and data information storage required is smaller; and the extraction and comparison speed and accuracy are higher.

The present application effectively saves the space on the surface where the binary graphic encoded pattern is located, compared with the technical solution of adding special graphics or code for anti-counterfeiting in a peripheral area of a binary graphic encoded pattern. Compared with the technical solution of retaining a specific position in the middle area of a binary graphic encoded pattern to add special graphics or code for anti-counterfeiting, in the solution of adding special graphics or code to a middle area, the process of encoding and decoding the binary graphic encoded pattern requires additional design and prevention, whereas the present application does not require such additional labour. Since microstructure features are much thinner than cells composing a binary encoded pattern, added microstructure features do not affect the reading of the binary pattern code.

As shown in Figure 3, the present application also discloses a binary graphic code creation system 100 for creating an authenticable binary graphic code, comprising:
an encoding unit 101 for, in response to a request for creation of a binary graphic code, creating a unique binary graphic encoded pattern for the information to be encoded;
an addition unit 102 for adding microstructure features to the binary graphic encoded pattern;
an extracting unit 103 for extracting the binary graphic encoded pattern and microstructure features; and
a recording unit 104 for recording the binary graphic encoded pattern and microstructure features as all or part of a standard for authenticating the binary graphic code.

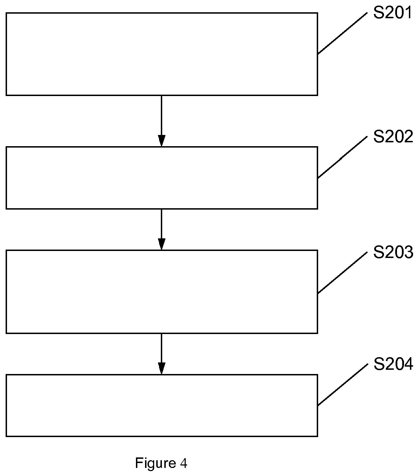

Referring to Figure 4 and Figure 7b, the present application further discloses a method for authenticating a binary graphic code created by using the aforesaid method, which comprises at least the following steps:
in step S201, in response to the authentication service requester Z's request for binary graphic code authentication, the authentication service provider X reads the binary graphic code to be authenticated;
in step S202, the authentication service provider X identifies the binary graphic encoded pattern and the microstructure features;
in step S203, the authentication service provider X compares the to-be-authenticated binary graphic encoded pattern and microstructure features with recorded binary graphic encoded patterns and microstructure features; and in step S204, the authentication service provider X provides an authentication result.

It can be understood that if, in the label creation process, the characteristic information about an area in which the binary graphic encoded pattern and the label or product surface overlap is also extracted and recorded and this characteristic information is used as one of the standards for authenticating the binary graphic code, then in step S202 and step S203, the characteristic information is also identified and compared at the same time, and is used as a reference for providing an authentication result in step S204. A method for comparing the to-be-authenticated binary graphic encoded pattern and microstructure features with recorded binary graphic encoded patterns and microstructure features comprises, but is not limited to, judging whether the degree of matching between the two reaches a set threshold; if the set threshold is reached, the authentication is deemed to have been passed; otherwise, the authentication is deemed to have not been passed. For example, assuming that the set threshold is 85%, the authentication is deemed to have been passed if the degree of matching between the two reaches 85%. As microstructure features are easily lost or partially lost in the process of replication, it is difficult for counterfeiters to achieve replicas that have the same high degree of matching as genuine products.

Depending on different anti-counterfeiting requirements, the aforementioned information to be encoded is confidential information itself in some embodiments; in some other embodiments, the information to be encoded may be a confidential information index for querying confidential information. For example, confidential information may be the origin, date of manufacture or manufacturer of a product, service information, etc., but is not limited thereto. Any information that the product provider Y deems it necessary to encrypt and that can be obtained only after passing the aforementioned specific authentication can be used as confidential information.

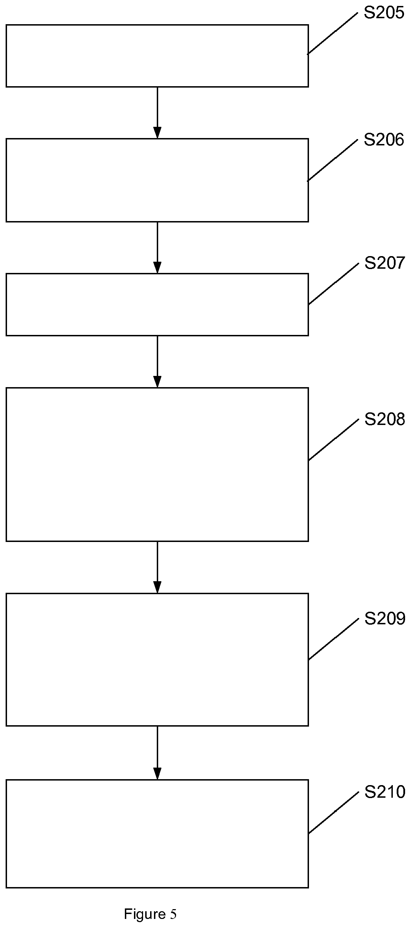

In some embodiments, the step of providing an authentication result further comprises allowing the encoded pattern to be decoded if the authentication is deemed to have been passed. In decoding an encoded pattern, if a binary graphic encoded pattern is created and to be encoded as confidential information itself, the confidential information can be obtained after decoding. Referring to Figure 5 and Figure 7c, if a binary graphic encoded pattern is created and to be encoded as a confidential information index, the step of allowing the encoded pattern to be decoded further comprises:
in step S205, the authentication service provider X immediately generates a query password having a validity period;
in step S206, the authentication service provider X sends the query password to the requester of binary graphic code creation Y and confirms its receipt;
in step S207, the authentication service provider X sends the query password and decoding key to the requester of binary graphic code authentication Z;
in step S208, the requester of binary graphic code authentication Z performs decoding using the decoding key, obtains the confidential information index, and sends the confidential information index and the received query password to the requester of binary graphic code creation Y;
in step S209, the requester of binary graphic code creation Y checks whether the query password sent by the requester of binary graphic code authentication Z is the same as the query password received by itself and is within the validity period;
in step S210, if the above-mentioned conditions are all satisfied, the requester of binary graphic code creation Y provides the requester of binary graphic code authentication Z with confidential information according to the confidential information index.

It can be understood that a product carrying the aforementioned label can be authenticated, tracked, or verified by the aforesaid method.

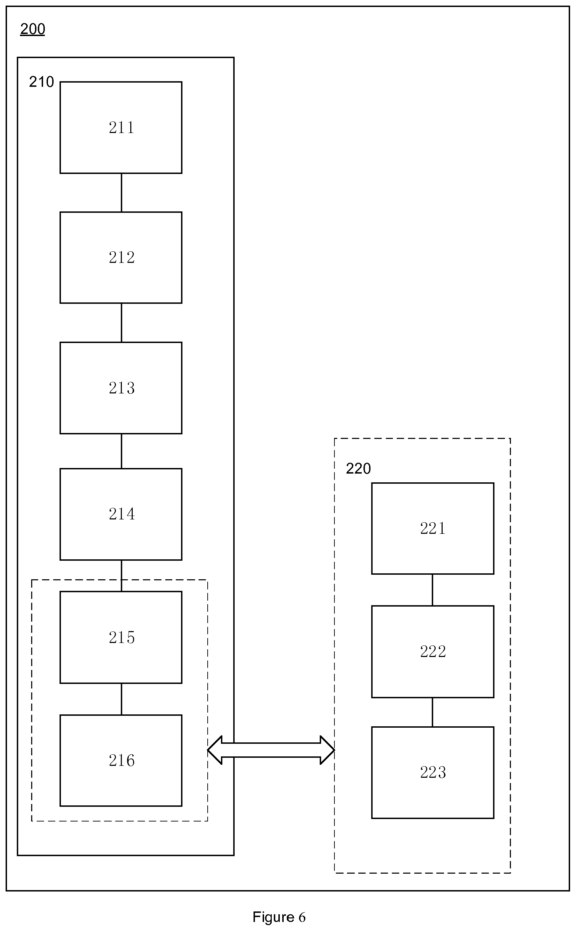

As shown in Figure 6, the present application further discloses a binary graphic encoding authentication system 200, comprising an authentication service providing end 210; the authentication service providing end 210 is for identifying the to-be-authenticated binary graphic encoding created by the binary graphic encoding system 100. The authentication service providing end is usually set on the side of the authentication service provider X. The authentication service providing end 210 comprises:
a reading unit 211 for, in response to a request for authentication of a binary graphic code, reading the binary graphic code to be authenticated;
an identification unit 212 for identifying the binary graphic encoded pattern and microstructure features;
a comparison unit 213 for comparing the to-be-authenticated binary graphic encoded pattern and microstructure features with recorded binary graphic encoded patterns and microstructure features; and
an authentication unit 214 for providing an authentication result.

In some implementations, the authentication service providing end 210 further comprises:
a password generating unit 215 for generating a query password immediately when the authentication result is a pass and the information to be encoded is a confidential information index, the query password having a validity period;
a password sending unit 216 for sending the query password to the requester of binary graphic code creation and confirming its receipt, and sending the query password and decoding key to the requester of binary graphic code authentication.

In order to cooperate with the authentication service providing end 210, the binary graphic code authentication system 200 further comprises a confidential information providing end 220, which is usually set on the side of the product provider Y, or is set independently but with the product provider Y having access authority. The confidential information providing end 220 comprises:
a password receiving unit 221 for receiving a query password sent from the authentication service providing X end and confirming its receipt, and receiving the product information index and query password sent by the requester of the binary graphic code authentication Z;
a password verification unit 222 for checking whether the query password from the requester of the binary graphic code authentication Z is the same as the query password from the authentication service providing end X and is within the validity period; and
a product information providing unit 223 for, if the password verification is passed, providing confidential information to the requester of the binary graphic code authentication Z according to the confidential information index.

In embodiments of the present application, the requester of binary graphic code creation Y, for example, is a product or service provider; the authentication service requester Z may be a link in the supply chain, for example, a distributor (enterprise) or an end user (individual). In the product distribution process, the product or service provider (the requester of binary graphic code creation Y) can easily provide services, such as product verification and origin tracking, for a distributor or an end user (the authentication service requester Z) through the service of creating authenticable binary graphic code and the service of authenticating binary graphic code provided by the authentication service provider X. Confidential information may be the origin, date of manufacture or manufacturer of a product, service information, etc. Any information that the product provider Y deems it necessary to encrypt and that can be obtained only after passing the aforementioned specific authentication can be used as confidential information.

As mentioned above, if necessary, confidential information can be stored by the product provider Y only, while the authentication service provider X and any other unrelated party in the circulation cannot access such information. Such an arrangement reduces the amount of information stored by the authentication service provider on the one hand, and ensures absolute security of the confidential information on the other hand.

Although the present application is illustrated and described on the basis of specific embodiments, the present application is not limited to the details given. Rather, various details about the present application may be modified within the scope of the claims.

## Claims

1. Method for creating an authenticable binary graphic code,comprising:
in response to a request for creation of the binary graphic code, creating a binary graphic encoded pattern for information to be encoded;
adding microstructure features to the binary graphic encoded pattern;
printing the binary graphic encoded pattern and the microstructure features on a label or a product surface, the microstructure features being much thinner than cells composing the binary graphic encoded pattern and not affecting the reading of the binary pattern code, and the label or product surface having a random effect on the integrity of the printed microstructure features;
extracting the binary graphic encoded pattern and microstructure features;
recording the binary graphic encoded pattern and microstructure features as all or part of a standard for authenticating the binary graphic code,
wherein said microstructure features are small, meaningful or insignificant dots, lattices, lines, graphic, text, or a combination thereof, and
a thickness of said microstructure features is close to the resolution of a printer.

2. Method for creating an authenticable binary graphic code according to Claim 1, **characterized in that** the microstructure features are randomly or pseudo-randomly generated.

3. Method for creating an authenticable binary graphic code according to Claim 1, **characterized in that** a characteristic information about an area in which the binary graphic encoded pattern and the label or product surface overlap is also extracted and recorded as part of the standard for authenticating the binary graphic code.

4. Method for creating an authenticable binary graphic code according to Claim 3, **characterized in that** the characteristic information comprises a relative positional relationship between a printed pattern or a self-texture of the label or product surface and the encoded pattern.

5. Method for creating an authenticable binary graphic code according to Claim 4, **characterized in that** the method for determining the relative positional relationship comprises: when the encoded pattern is used as a coordinate, a printed pattern or self-texture of the label or product surface is in a coordinate on the encoded pattern.

6. Product carrying an authenticable binary graphic code, comprising:
a product body with a label or a product surface;
a binary graphic code, comprising a binary graphic encoded pattern encoding information and microstructure features, printed on the label or product surface, the microstructure features are much thinner than cells composing the binary graphic encoded pattern and do not affect the reading of the binary pattern code, the label or product surface has a random effect on the integrity of the printed microstructure features, and
said microstructure features are small, meaningful or insignificant dots, lattices, lines, graphic, text or a combination thereof, and
a thickness of said microstructure features is close to the resolution of a printer.

7. Method for creating an authenticable binary graphic code according to Claim 1, **characterized in that** the microstructure features are randomly or pseudo-randomly generated.

8. Method for authenticating a binary graphic code created by a method according to any one of Claims 1 to 5,comprising:
in response to a request for authentication of a binary graphic code, reading the binary graphic code to be authenticated;
identifying a binary graphic encoded pattern and microstructure features;
comparing a to-be-authenticated binary graphic encoded pattern and the microstructure features with recorded binary graphic encoded patterns and the microstructure features; and
providing an authentication result.

9. Authentication method according to Claim 8, **characterized in that** a method for comparing the to-be-authenticated binary graphic encoded pattern and microstructure features with recorded binary graphic encoded patterns and microstructure features comprises: judging whether the degree of matching between the two reaches a set threshold; if the set threshold is reached, the authentication is deemed to have been passed; otherwise, the authentication is deemed to have not been passed.

10. Authentication method according to Claim 9, **characterized in that**, the step of providing an authentication result further comprises: if the authentication is deemed to have been passed, allowing the binary graphic encoded pattern to be decoded and obtaining confidential information.

11. Authentication method according to Claim 8, **characterized in that** the information to be encoded is confidential information or a confidential information index.

12. Authentication method according to claim 11, **characterized in that** when the information to be encoded is a confidential information index, the step of allowing the binary graphic encoded pattern to be decoded and obtaining confidential information comprises:
generating a query password immediately, the query password having a validity period;
sending the query password to the requester of binary graphic code creation and confirming its receipt;
sending the query password and a decoding key to the requester of binary graphic code authentication;
the requester of binary graphic code authentication performing decoding using the decoding key, obtaining the confidential information index, and sending the confidential information index and the received query password to the requester of binary graphic code creation;
the requester of binary graphic code creation checking whether the query password sent by the requester of binary graphic code authentication is the same as the query password received by itself and is within the validity period;
if yes, providing the requester of binary graphic code authentication with confidential information according to the confidential information index.

13. Binary graphic code creation system for creating an authenticable binary graphic code, **characterized in that** the system comprises:
an encoding unit for, in response to a request for creation of the binary graphic code, creating a binary graphic encoded pattern for information to be encoded;
an addition unit for adding microstructure features to the binary graphic encoded pattern;
a unit configured to perform a step of printing the binary graphic encoded pattern and the microstructure features on a label or a product surface, the microstructure features being much thinner than cells composing the binary graphic encoded pattern and not affecting the reading of the binary pattern code, and the label or product surface having a random effect on the integrity of the printed microstructure features;
an extracting unit for extracting the binary graphic encoded pattern and microstructure features; and
a recording unit for recording the binary graphic encoded pattern and microstructure features as all or part of a standard for authenticating the binary graphic code,
wherein said microstructure features are small, meaningful or insignificant dots, lattices, lines, graphic, text or a combination thereof, and
a thickness of said microstructure features is close to the resolution of a printer.

14. Binary graphic code authentication system, **characterized in that** the system comprises:
an authentication service providing end for identifying a to-be-authenticated binary graphic code created by the system according to Claim 11, which comprises:
a reading unit for, in response to a request for authentication of a binary graphic code, reading the binary graphic code to be authenticated;
an identification unit for identifying the binary graphic encoded pattern and microstructure features;
a comparison unit for comparing the to-be-authenticated binary graphic encoded pattern and microstructure features with recorded binary graphic encoded patterns and microstructure features; and
an authentication unit for providing an authentication result.

15. Binary graphic code authentication system according to Claim 14, **characterized in that** the authentication service providing end for identifying a to-be-authenticated binary graphic code further comprises:
a password generating unit for generating a query password immediately when the authentication result is a pass and the information to be encoded is a confidential information index, the query password having a validity period; and
a password sending unit for sending the query password to the requester of binary graphic code creation and confirming its receipt, and sending the query password and decoding key to the requester of binary graphic code authentication

16. Binary graphic code authentication system according to Claim 14, **characterized in that** the system further comprises a confidential information providing end for coordinating with the authentication service providing end, the confidential information providing end comprising:
a password receiving unit for receiving a query password sent from the authentication service providing end and confirming its receipt, and receiving the product information index and query password sent by the requester of the binary graphic code authentication;
a password verification unit for checking whether the query password from the requester of the binary graphic code authentication is the same as the query password from the authentication service providing end and is within the validity period; and
a product information providing unit for, if the password verification is passed, providing confidential information to the requester of the binary graphic code authentication according to the confidential information index.

## Patentansprüche

1. Verfahren zum Erzeugen eines authentifizierbaren binären grafischen Codes, das Folgendes umfasst:
als Reaktion auf eine Anforderung einer Erzeugung des binären grafischen Codes Erzeugen eines binären grafischen codierten Musters für zu codierende Informationen;
Hinzufügen von Mikrostrukturmerkmalen zu dem binären grafischen codierten Muster;
Drucken des binären grafischen codierten Musters und der Mikrostrukturmerkmale auf ein Etikett oder eine Produktoberfläche, wobei die Mikrostrukturmerkmale viel dünner als Zellen sind, die das binäre grafische codierte Muster bilden, und das Lesen des binären Mustercodes nicht beeinflussen und das Etikett oder die Produktoberfläche eine zufällige Auswirkung auf die Integrität der gedruckten Mikrostrukturmerkmale besitzt;
Extrahieren des binären grafischen codierten Musters und der Mikrostrukturmerkmale;
Aufzeichnen des binären grafischen codierten Musters und der Mikrostrukturmerkmale als einen Standard oder einen Teil davon zum Authentifizieren des binären grafischen Codes,
wobei die Mikrostrukturmerkmale kleine, bedeutende oder unbedeutende Punkte, Gitter, Linien, Grafik, Text oder eine Kombination davon sind und
eine Dicke der Mikrostrukturmerkmale nah an der Auflösung eines Druckers ist.

2. Verfahren zum Erzeugen eines authentifizierbaren binären grafischen Codes nach Anspruch 1, **dadurch gekennzeichnet, dass** die Mikrostrukturmerkmale zufällig oder pseudozufällig erzeugt werden.

3. Verfahren zum Erzeugen eines authentifizierbaren binären grafischen Codes nach Anspruch 1, **dadurch gekennzeichnet, dass** charakteristische Informationen über einen Bereich, in dem sich das binäre grafische codierte Muster und das Etikett oder die Produktoberfläche überschneiden, auch extrahiert und als Teil des Standards zum Authentifizieren des binären grafischen Codes aufgezeichnet werden.

4. Verfahren zum Erzeugen eines authentifizierbaren binären grafischen Codes nach Anspruch 3, **dadurch gekennzeichnet, dass** die charakteristischen Informationen eine relative Positionsbeziehung zwischen einem gedruckten Muster oder einer Selbststrukturierung des Etiketts oder der Produktoberfläche und dem codierten Muster umfassen.

5. Verfahren zum Erzeugen eines authentifizierbaren binären grafischen Codes nach Anspruch 4, **dadurch gekennzeichnet, dass** das Verfahren zum Bestimmen der relativen Positionsbeziehung Folgendes umfasst: dann, wenn das codierte Muster als eine Koordinate verwendet wird, ist ein gedrucktes Muster oder eine Selbststrukturierung des Etiketts oder der Produktoberfläche in einer Koordinate auf dem codierten Muster.

6. Produkt, das einen authentifizierbaren binären grafischen Code trägt, das Folgendes umfasst:
einen Produktkörper mit einem Etikett oder einer Produktoberfläche;
einen binären grafischen Code, der ein binäres grafisches codiertes Muster, das Informationen codiert, und Mikrostrukturmerkmale umfasst und auf das Etikett oder die Produktoberfläche gedruckt ist, wobei die Mikrostrukturmerkmale viel dünner als Zellen sind, die das binäre grafische codierte Muster bilden, und das Lesen des binären Mustercodes nicht beeinflussen, wobei das Etikett oder die Produktoberfläche eine zufällige Auswirkung auf die Integrität der gedruckten Mikrostrukturmerkmale besitzt, und
die Mikrostrukturmerkmale kleine, bedeutende oder unbedeutende Punkte, Gitter, Linien, Grafik, Text oder eine Kombination davon sind und
eine Dicke der Mikrostrukturmerkmale nah an der Auflösung eines Druckers ist.

7. Verfahren zum Erzeugen eines authentifizierbaren binären grafischen Codes nach Anspruch 1, **dadurch gekennzeichnet, dass** die Mikrostrukturmerkmale zufällig oder pseudozufällig erzeugt werden.

8. Verfahren zum Authentifizieren eines binären grafischen Codes, der durch ein Verfahren nach einem der Ansprüche 1 bis 5 erzeugt wurde, das Folgendes umfasst:
als Reaktion auf eine Anforderung einer Authentifizierung eines binären grafischen Codes Lesen des zu authentifizierenden binären grafischen Codes;
Identifizieren eines binären grafischen codierten Musters und von Mikrostrukturmerkmalen;
Vergleichen eines zu authentifizierenden binären grafischen codierten Musters und der Mikrostrukturmerkmale mit aufgezeichneten binären grafischen codierten Mustern und Mikrostrukturmerkmalen; und
Liefern eines Authentifizierungsergebnisses.

9. Authentifizierungsverfahren nach Anspruch 8, **dadurch gekennzeichnet, dass** ein Verfahren zum Vergleichen des zu authentifizierenden binären grafischen codierten Musters und der Mikrostrukturmerkmale mit aufgezeichneten binären grafischen codierten Mustern und Mikrostrukturmerkmalen Folgendes umfasst: Beurteilen, ob der Übereinstimmungsgrad zwischen den beiden einen eingestellten Schwellenwert erreicht; dann, wenn der eingestellte Schwellenwert erreicht wird, gilt die Authentifizierung als bestanden; anderenfalls, gilt die Authentifizierung als nicht bestanden.

10. Authentifizierungsverfahren nach Anspruch 9, **dadurch gekennzeichnet, dass** der Schritt des Lieferns eines Authentifizierungsergebnisses ferner Folgendes umfasst: dann, wenn die Authentifizierung als bestanden gilt, Erlauben, dass das binäre grafische codierte Muster decodiert wird und Erhalten vertraulicher Informationen.

11. Authentifizierungsverfahren nach Anspruch 8, **dadurch gekennzeichnet, dass** die zu codierenden Informationen vertrauliche Informationen oder ein Index vertraulicher Informationen sind.

12. Authentifizierungsverfahren nach Anspruch 11, **dadurch gekennzeichnet, dass**
dann, wenn die zu codierenden Informationen ein Index vertraulicher Informationen sind, der Schritt des Erlaubens, dass das binäre grafische codierte Muster decodiert wird, und das Erhalten vertraulicher Informationen Folgendes umfasst:
sofort Erzeugen eines Abfragepassworts, wobei das Abfragepasswort eine Gültigkeitsperiode besitzt;
Senden des Abfragepassworts an den Anforderer der Erzeugung des binären grafischen Codes und Bestätigen seines Empfangs;
Senden des Abfragepassworts und eines Decodierschlüssels an den Anforderer der Authentifizierung des binären grafischen Codes;
wobei der Anforderer der Authentifizierung des binären grafischen Codes eine Decodierung unter Verwendung des Decodierschlüssels, das Erhalten des Index vertraulicher Informationen und das Senden des Index vertraulicher Informationen und des empfangenen Abfragepassworts an den Anforderer der Erzeugung des binären grafischen Codes ausführt;
der Anforderer der Erzeugung des binären grafischen Codes überprüft, ob das Abfragepasswort, das durch den Anforderer der Authentifizierung des binären grafischen Codes gesendet wurde, dasselbe wie das von selbst empfangene Abfragepasswort ist und innerhalb der Gültigkeitsperiode ist;
dann, wenn ja, Beliefern des Anforderers der Authentifizierung des binären grafischen Codes mit vertraulichen Informationen gemäß dem Index vertraulicher Informationen.

13. System zur Erzeugung eines binären grafischen Codes zum Erzeugen eines authentifizierbaren binären grafischen Codes, **dadurch gekennzeichnet, dass** das System Folgendes umfasst:
eine Codiereinheit, um als Reaktion auf eine Anforderung einer Erzeugung des binären grafischen Codes ein binäres grafisches codiertes Musters für zu codierende Informationen zu erzeugen;
eine Hinzufügeeinheit, um Mikrostrukturmerkmale zu dem binären grafischen codierten Muster hinzuzufügen;
eine Einheit, die konfiguriert ist, einen Schritt des Druckens des binären grafischen codierten Musters und der Mikrostrukturmerkmale auf ein Etikett oder eine Produktoberfläche auszuführen, wobei die Mikrostrukturmerkmale viel dünner als Zellen sind, die das binäre grafische codierte Muster bilden, und das Lesen des binären Mustercodes nicht beeinflussen und das Etikett oder die Produktoberfläche eine zufällige Auswirkung auf die Integrität der gedruckten Mikrostrukturmerkmale besitzt;
eine Extraktionseinheit, um das binäre grafische codierte Muster und die Mikrostrukturmerkmale zu extrahieren; und
eine Aufzeichnungseinheit, um das binäre grafische codierte Muster und die Mikrostrukturmerkmale als alles oder Teil eines Standards zum Authentifizieren des binären grafischen Codes aufzuzeichnen, wobei die Mikrostrukturmerkmale kleine, bedeutende oder unbedeutende, Punkte, Gitter, Linien, Grafik, Text oder eine Kombination davon sind und
eine Dicke der Mikrostrukturmerkmale nah an der Auflösung eines Druckers ist.

14. Authentifizierungssystem für binären grafischen Code, **dadurch gekennzeichnet, dass** das System Folgendes umfasst:
ein Ende zum Liefern eines Authentifizierungsdienstes zum Identifizieren eines zu authentifizierenden binären grafischen Codes, der durch das System nach Anspruch 11 erzeugt wurde, das Folgendes umfasst:
eine Leseeinheit, um als Reaktion auf eine Anforderung einer Authentifizierung eines binären grafischen Codes den zu authentifizierenden binären grafischen Code zu lesen;
eine Identifikationseinheit, um das binäre grafische codierte Muster und Mikrostrukturmerkmale zu identifizieren;
eine Vergleichseinheit, um das zu authentifizierende binäre grafische codierte Muster und Mikrostrukturmerkmale mit aufgezeichneten binären grafischen codierten Mustern und Mikrostrukturmerkmalen zu vergleichen; und
eine Authentifizierungseinheit, um ein Authentifizierungsergebnis zu liefern.

15. Authentifizierungssystem für binären grafischen Code nach Anspruch 14, **dadurch gekennzeichnet, dass** das Ende zum Liefern des Authentifizierungsdienstes zum Identifizieren eines zu authentifizierenden binären grafischen Codes ferner Folgendes umfasst:
eine Passworterzeugungseinheit, um ein Abfragepasswort sofort zu erzeugen, wenn das Authentifizierungsergebnis ein Bestanden ist und die zu codierenden Informationen ein Index vertraulicher Informationen sind, wobei das Abfragepasswort eine Gültigkeitsperiode besitzt; und
eine Passwortsendeeinheit, um das Abfragepasswort an den Anforderer der Erzeugung eines binären grafischen Codes zu senden und seinen Empfang zu bestätigen und das Abfragepasswort und den Decodierschlüssel an den Anforderer der Authentifizierung des binären grafischen Codes zu senden.

16. Authentifizierungssystem für binären grafischen Code nach Anspruch 14, **dadurch gekennzeichnet, dass** das System ferner ein Ende zum Liefern vertraulicher Informationen zum Koordinieren mit dem Ende zum Liefern des Authentifizierungsdienstes umfasst, wobei das Ende zum Liefern vertraulicher Informationen Folgendes umfasst:
eine Passwortempfangseinheit, um ein Abfragepasswort, das von dem Ende zum Liefern eines Authentifizierungsdienstes gesendet wird, zu empfangen und seinen Empfang zu bestätigen und den Index von Produktinformationen und das Abfragepasswort, das durch den Anforderer der Authentifizierung des binären grafischen Codes gesendet wird, zu empfangen;
eine Passwortüberprüfungseinheit, um zu überprüfen, ob das Abfragepasswort von dem Anforderer der Authentifizierung des binären grafischen Codes dasselbe wie das Abfragepasswort von dem Ende zum Liefern des Authentifizierungsdienstes ist und innerhalb der Gültigkeitsperiode ist; und
eine Produktinformationsliefereinheit, um dann, wenn die Passwortüberprüfung bestanden ist, vertrauliche Informationen an den Anforderer der Authentifizierung des binären grafischen Codes gemäß dem Index vertraulicher Informationen zu liefern.

## Revendications

1. Procédé de création d'un code graphique binaire authentifiable, comprenant :
en réponse à une demande de création du code graphique binaire, la création d'un motif graphique binaire codé pour des informations à coder ;
l'ajout de caractéristiques microstructurales au motif graphique binaire codé ;
l'impression du motif graphique binaire codé et des caractéristiques microstructurales sur une étiquette ou une surface de produit, les caractéristiques microstructurales étant beaucoup plus minces que des cellules composant le motif graphique binaire codé et n'affectant pas la lecture du code à motif binaire, et l'étiquette ou la surface de produit ayant un effet aléatoire sur l'intégrité des caractéristiques microstructurales imprimées ;
l'extraction du motif graphique binaire codé et des caractéristiques microstructurales ;
l'enregistrement du motif graphique binaire codé et des caractéristiques microstructurales en tant que tout ou partie d'une norme d'authentification du code graphique binaire,
lesdites caractéristiques microstructurales étant des petits points, treillis, traits, graphiques, textes significatifs ou non significatifs ou une combinaison de ceux-ci, et une épaisseur desdites caractéristiques microstructurales étant proche de la résolution d'une imprimante.

2. Procédé de création d'un code graphique binaire authentifiable selon la revendication 1, **caractérisé en ce que** les caractéristiques microstructurales sont générées de manière aléatoire ou pseudo-aléatoire.

3. Procédé de création d'un code graphique binaire authentifiable selon la revendication 1, **caractérisé en ce qu'**une information caractéristique concernant une zone de chevauchement du motif graphique binaire codé et de l'étiquette ou la surface de produit est également extraite et enregistrée en tant que partie de la norme d'authentification du code graphique binaire.

4. Procédé de création d'un code graphique binaire authentifiable selon la revendication 3, **caractérisé en ce que** l'information caractéristique comprend une relation de position relative entre un motif imprimé ou une texture propre de l'étiquette ou de la surface de produit et le motif codé.

5. Procédé de création d'un code graphique binaire authentifiable selon la revendication 4, **caractérisé en ce que** le procédé de détermination de la relation de position relative s'établit comme suit : lorsque le motif codé est utilisé comme système de coordonnées, un motif imprimé ou une texture propre de l'étiquette ou de la surface de produit s'exprime en coordonnées sur le motif codé.

6. Produit portant un code graphique binaire authentifiable, comprenant :
un corps de produit pourvu d'une étiquette ou d'une surface de produit ;
un code graphique binaire, comprenant un motif graphique binaire codé codant des informations et des caractéristiques microstructurales, imprimés sur l'étiquette ou la surface de produit, les caractéristiques microstructurales étant beaucoup plus minces que des cellules composant le motif graphique binaire codé et n'affectant pas la lecture du code à motif binaire, l'étiquette ou la surface de produit ayant un effet aléatoire sur l'intégrité des caractéristiques microstructurales imprimées, et
lesdites caractéristiques microstructurales étant des petits points, treillis, traits, graphiques, textes significatifs ou non significatifs ou une combinaison de ceux-ci, et une épaisseur desdites caractéristiques microstructurales étant proche de la résolution d'une imprimante.

7. Procédé de création d'un code graphique binaire authentifiable selon la revendication 1, **caractérisé en ce que** les caractéristiques microstructurales sont générées de manière aléatoire ou pseudo-aléatoire.

8. Procédé d'authentification d'un code graphique binaire créé par un procédé selon l'une quelconque des revendications 1 à 5, comprenant :
en réponse à une demande d'authentification d'un code graphique binaire, la lecture du code graphique binaire à authentifier ;
l'identification d'un motif graphique binaire codé et de caractéristiques microstructurales ;
la comparaison d'un motif graphique binaire et des caractéristiques microstructures à authentifier à des motifs graphiques binaires codés et des caractéristiques microstructurales enregistrés ; et
la fourniture d'un résultat d'authentification.

9. Procédé d'authentification selon la revendication 8, **caractérisé en ce qu'**un procédé de comparaison du motif graphique binaire codé et des caractéristiques microstructurales à authentifier à des motifs graphiques binaires codés et des caractéristiques microstructurales enregistrés comprend : l'évaluation si le degré de correspondance entre les deux atteint un seuil défini ; si le seuil défini est atteint, l'authentification étant qualifiée de succès ; dans le cas contraire, l'authentification étant qualifiée d'échec.

10. Procédé d'authentification selon la revendication 9, **caractérisé en ce que** l'étape de fourniture d'un résultat d'authentification comprend en outre : si l'authentification est qualifiée de succès, l'autorisation du décodage du motif graphique binaire codé et l'obtention d'informations confidentielles.

11. Procédé d'authentification selon la revendication 8, **caractérisé en ce que** les informations à coder sont des informations confidentielles ou un index d'informations confidentielles.

12. Procédé d'authentification selon la revendication 11, **caractérisé en ce que**
lorsque les informations à coder sont un index d'informations confidentielles, l'étape d'autorisation du décodage du motif graphique binaire codé et d'obtention d'informations confidentielles comprend :
la génération instantanée d'un mot de passe de requête, le mot de passe de requête ayant une période de validité ;
l'envoi du mot de passe de requête au demandeur de la création de code graphique binaire et la confirmation de sa réception;
l'envoi du mot de passe de requête et d'une clé de décodage au demandeur de l'authentification de code graphique binaire ;
par le demandeur de l'authentification de code graphique binaire, la réalisation d'un décodage au moyen de la clé de décodage, l'obtention de l'index d'informations confidentielles et l'envoi de l'index d'informations confidentielles et du mot de passe de requête reçu au demandeur de la création de code graphique binaire ;
par le demandeur de la création de code graphique binaire, la vérification si le mot de passe de requête envoyé par le demandeur de l'authentification de code graphique binaire est le même que le mot de passe de requête qu'il a reçu et qu'il s'inscrit dans la période de validité ;
dans l'affirmative, la fourniture au demandeur de l'authentification de code graphique binaire d'informations confidentielles selon l'index d'informations confidentielles.

13. Système de création de code graphique binaire pour créer un code graphique binaire authentifiable, le système étant **caractérisé en ce qu'**il comprend :
une unité de codage pour, en réponse à une demande de création du code graphique binaire, créer un motif graphique binaire codé pour des informations à coder ;
une unité d'ajout pour ajouter des caractéristiques microstructurales au motif graphique binaire codé ;
une unité configurée pour réaliser une étape d'impression du motif graphique binaire codé et des caractéristiques microstructurales sur une étiquette ou une surface de produit, les caractéristiques microstructurales étant beaucoup plus minces que des cellules composant le motif graphique binaire codé et n'affectant pas la lecture du code à motif binaire, et l'étiquette ou la surface de produit ayant un effet aléatoire sur l'intégrité des caractéristiques microstructurales imprimées ;
une unité d'extraction pour extraire le motif graphique binaire codé et les caractéristiques microstructurales ; et
une unité d'enregistrement pour enregistrer le motif graphique binaire codé et les caractéristiques microstructurales en tant que tout ou partie d'une norme d'authentification du code graphique binaire,
lesdites caractéristiques microstructurales étant des petits points, treillis, traits, graphiques, textes significatifs ou non significatifs ou une combinaison de ceux-ci, et une épaisseur desdites caractéristiques microstructurales étant proche de la résolution d'une imprimante.

14. Système d'authentification de code graphique binaire, le système étant **caractérisé en ce qu'**il comprend :
une extrémité fournissant un service d'authentification pour identifier un code graphique binaire à authentifier créé par le système selon la revendication 11, qui comprend :
une unité de lecture pour, en réponse à une demande d'authentification d'un code graphique binaire, lire le code graphique binaire à authentifier ;
une unité d'identification pour identifier le motif graphique binaire codé et les caractéristiques microstructurales ;
une unité de comparaison pour comparer le motif graphique binaire et les caractéristiques microstructures à authentifier à des motifs graphiques binaires codés et des caractéristiques microstructurales enregistrés ; et
une unité d'authentification pour fournir un résultat d'authentification.

15. Système d'authentification de code graphique binaire selon la revendication 14, **caractérisé en ce que** l'extrémité fournissant un service d'authentification pour identifier un code graphique binaire à authentifier comprend en outre :
une unité de génération de mot de passe pour générer instantanément un mot de passe de requête lorsque le résultat d'authentification est un succès et les informations à coder sont un index d'informations confidentielles, le mot de passe de requête ayant une période de validité ; et
une unité d'envoi de mot de passe pour envoyer le mot de passe de requête au demandeur de la création de code graphique binaire et confirmer sa réception, et envoyer le mot de passe de requête et une clé de décodage au demandeur de l'authentification de code graphique binaire.

16. Système d'authentification de code graphique binaire selon la revendication 14, le système étant **caractérisé en ce qu'**il comprend en outre une extrémité fournissant des informations confidentielles destinée à se coordonner avec l'extrémité fournissant un service d'authentification, l'extrémité fournissant des informations confidentielles comprenant :
une unité de réception de mot de passe pour recevoir un mot de passe de requête envoyé depuis l'extrémité fournissant un service d'authentification et confirmer sa réception, et recevoir l'index d'informations de produit et le mot de passe de requête envoyés par le demandeur de l'authentification de code graphique binaire ;
une unité de vérification de mot de passe pour vérifier si le mot de passe de requête provenant du demandeur de l'authentification de code graphique binaire est le même que le mot de passe de requête provenant de l'extrémité fournissant un service d'authentification et qu'il s'inscrit dans la période de validité ; et
une unité de fourniture d'informations de produit pour, si la vérification de mot de passe est un succès, fournir au demandeur de l'authentification de code graphique binaire des informations confidentielles selon l'index d'informations confidentielles.
